(19) **Europäisches Patentamt**
**European Patent Office**
**Office européen des brevets**

(11) **EP 1 846 914 B1**

(12) **EUROPEAN PATENT SPECIFICATION**

(45) Date of publication and mention
of the grant of the patent:
**26.04.2017 Bulletin 2017/17**

(51) Int Cl.:
***G06K 1/00*** *(2006.01)* ***H04N 1/60*** *(2006.01)*

(21) Application number: **06733855.8**

(86) International application number:
**PCT/US2006/002507**

(22) Date of filing: **26.01.2006**

(87) International publication number:
**WO 2006/081253 (03.08.2006 Gazette 2006/31)**

(54) **COLOR CONVERSION USING BARYCENTRIC PROJECTIONS**

FARBUMWANDLUNG MITTELS BARYZENTRISCHER PROJEKTIONEN

CONVERSION DE COULEURS UTILISANT DES PROJECTIONS BARYCENTRIQUES

(84) Designated Contracting States:
**DE FR GB IT NL**

(30) Priority: **26.01.2005 US 42140**
**26.01.2005 US 42106**

(43) Date of publication of application:
**24.10.2007 Bulletin 2007/43**

(73) Proprietors:
• **CANON KABUSHIKI KAISHA**
**Tokyo (JP)**
• **Microsoft Technology Licensing, LLC**
**Redmond, WA 98052 (US)**

(72) Inventors:
• **TIN, Siu-kei**
**Milpitas, CA 95305 (US)**
• **NEWMAN, Todd, D.**
**Palo Alto, CA 94303 (US)**

(74) Representative: **TBK et al**
**Bavariaring 4-6**
**80336 München (DE)**

(56) References cited:
**US-A- 4 511 989      US-A1- 2002 113 982**
**US-A1- 2003 095 638      US-A1- 2005 254 073**
**US-A1- 2006 055 946      US-B1- 6 185 325**
**US-B1- 6 335 800      US-B1- 6 373 580**
**US-B1- 6 411 305      US-B1- 7 023 585**
**US-B2- 6 982 710      US-B2- 7 019 868**

• **CHANG J Z ET AL: "Recent results in colour calibration using sequential linear interpolation", IS&T'S 47TH ANNUAL CONFERENCE/ICPS,, 1 January 1994 (1994-01-01), pages 500-505, XP008113761,**
• **HALL C A ET AL: "Transfinite interpolation of steam tables", JOURNAL OF COMPUTATIONAL PHYSICS, LONDON, GB, vol. 18, no. 1, 1 May 1975 (1975-05-01), pages 79-91, XP024751595, ISSN: 0021-9991, DOI: 10.1016/0021-9991(75)90103-5 [retrieved on 1975-05-01]**
• **SPIE vol. 1909, August 1993,**

**Description**

BACKGROUND

Field of the Invention

The present invention relates generally to color conversion and more particularly to color conversion in higher dimensional color spaces and using interpolation of values using look up tables.

Description of the Related Art

A conventional color printer system employs Cyan Magenta Yellow and blacK (CMYK) inks. To extend the range of colors that a color printer can produce, that is extend the gamut of colors the color printer can produce, one approach taken is to add new inks to the system. The inks typically added are colors that CMYK inks have difficulty reproducing. Common choices are orange, green, red, blue, etc. In another vein, in an attempt to increase the "apparent resolution" of the color printer, inks with different tints have been used, such as light cyan, light magenta, etc. In effect, the resulting color printer has more than four channels. After a decade's development of "high fidelity" printing, as printing using multichannel systems such as CMYK systems that have been enhanced with additional inks is known, it is now common to encounter printers with more than four channels.

Color printers are peculiar in the sense that although the color printer is often the final output device, people are also interested in color conversion from the color printer's color space to another color device's color space. In the case of a CMYK color printer, one such transformation is from CMYK to XYZ, known as the "forward model" of the color printer. By combining the forward model with other transformations, it is possible to emulate CMYK prints on another device. For instance, a CMYK printer to Red Green Blue (RGB) monitor conversion would make it possible to proof the output of the CMYK printer on an RGB monitor. Similarly, the same applies to high fidelity printers. A CMYK Orange Green (CMYKOG) to RGB conversion would allow proofing of CMYKOG output on a RGB monitor.

A conventional approach of implementing such color conversion efficiently is via a uniform Look-Up Table (LUT). For example, in an International Color Consortium (ICC) profile for a CMYKOG printer, the ICC specification mandates a so-called A2B1 tag that stores a uniform LUT representing a uniform sampling in the CMYKOG device space of the forward model, which goes from CMYKOG to the ICC "Profile Connection Space" (either CIELAB or CIEXYZ). Also, the ICC link profile enables a direct transformation from CMYKOG device space to any color space including a device space, also in the form of a LUT sampled uniformly in CMYKOG space. Furthermore, sampling is never done with a high number of levels because of the large size of the resulting LUT, except in the case of monochrome devices (1 channel). Instead, sampling with lower levels is used, with typical choices of 9 levels, 17 levels, or 33 levels. With a lower number levels in each channel, the LUT is used in conjunction with an interpolation algorithm to produce the result if a requested level is in between two sampled levels. In short, LUT uniformly sampled in the source color space of the transformation followed by interpolation is mandated in ICC specification and is considered the industrial standard.

Beyond the ICC's approach of uniform LUT, it is noteworthy that other transform structures have been proposed. In the Sequential Linear Interpolation (SLI) structure, nodes of a "LUT" are not uniformly spaced but instead are placed strategically so that the resulting grid minimizes the interpolation error by following the characteristics of the underlying transformation, putting more nodes in places where the transformation varies more rapidly, less in places where the transformation varies slowly. In another approach called Variable Rectilinear Interpolation (VRI) structure, a non-uniform grid is constructed with the same objective as SLI, which is to minimize the interpolation error. However, the VRI node placement uses the idea of successive subdivision of rectangular cells, subdividing more times in places where the underlying transformation varies rapidly, less times in places where the transformation varies slowly.

While a uniform LUT is conceptually simple and easy to implement, and interpolation on a uniform LUT is generally very efficient, the LUT size increases exponentially with the input dimension. In fact, if $d$ is the number of steps used in the uniform LUT, and $n$ is the number of channels in the source color space, then the number of nodes in the LUT is $d^n$. Clearly, the number of nodes quickly becomes so computationally demanding in storage/memory that computational resources may become strained. For high fidelity devices with six or eight channels, an ICC implementation of the device profile practically necessitates using fewer steps in the LUT, sometimes even down to 5 steps in the A2B1 table to keep the profile size within megabytes instead of gigabytes. Clearly, using smaller number of steps increases interpolation error, as there are now fewer sampling steps. Moreover, because the LUT is required to be uniform, this is an across-the-board degradation of accuracy over the whole color space, even in those regions of the space where a significant color difference can be caused by small change in the device value. Also peculiar to high fidelity devices is the fact that certain subspaces of the whole device space are more important than the others. For example, in CMYKOG space, cyan and green inks are seldom used together because their hues are largely overlapping each other, and the same goes for yellow and orange inks. A uniform reduction in the number of steps can be viewed as an overall degradation in quality across the whole color space, which is something that can be tolerated for the improbable ink combinations, but not for the likely/important combinations.

In either the SLI or VRI approach, the objective is to minimize the interpolation error, not to control the total number of nodes used in the LUT. They are mainly used in conventional color spaces such as RGB, CMYK or CIELAB, which have four or less channels. In fact, the objective of minimizing the interpolation error may result in a LUT becoming bigger than it would be if uniform LUT was used.

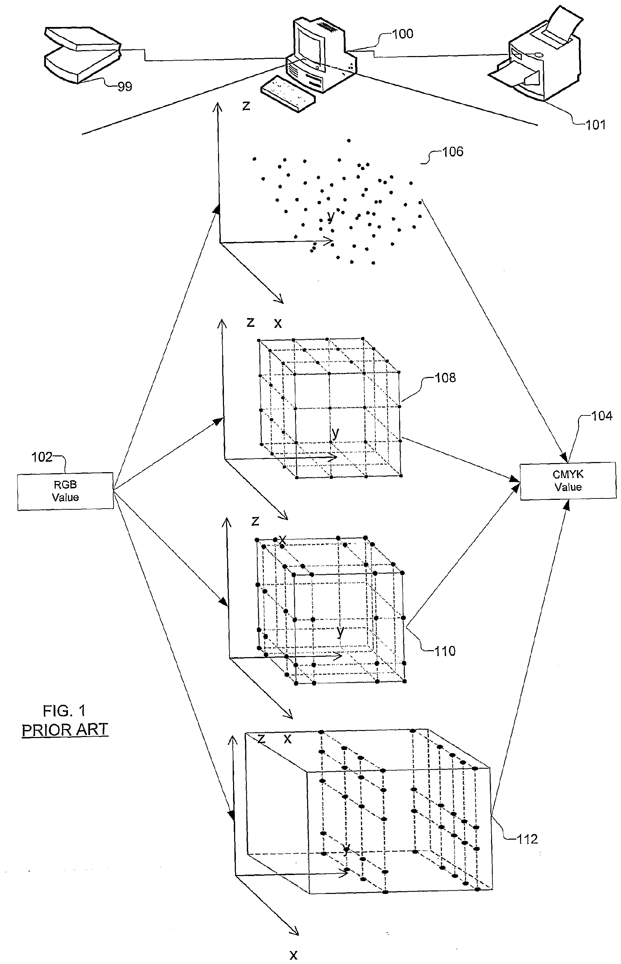

FIG. 1 is a block diagram illustrating use of a LUT by a color device to map from one color space to another. In this example, a data processing system, such as computer 100, maps color values of a first color device, such as color scanner 99, to color values for a second color device, such as color printer 101. For example, the data processing system may map RGB color value 102 generated by the color scanner to CMYK color value 104 used by the color printer. The data processing system does so using one of several LUTs, 106, 108, 110 and 112. The choice of the interpolation algorithm depends on the geometrical arrangement of the sampling points. If the points are totally unstructured, or what is known as a "point cloud" 106, then interpolation methods suitable for scattered data are used. Such methods are generally slow, and are employed only in situations where the sampling locations cannot be arranged.

On the other extreme of point clouds is the case where the sampling points fall on a rectangular grid 108. The simplest situation of a rectangular grid is one with uniform sampling in each channel. Given an input point, its enclosing cell can be efficiently located, then an interpolation algorithm, such as tetrahedral interpolation, can be used to perform the interpolation within this enclosing cell.

A slightly more complicated situation is a rectangular grid 110 with non-uniform sampling in each channel. In the case of non-uniformly sampled rectangular grid, the enclosing cell can still be determined quite easily, though not as efficiently as the uniform case. Once the enclosing cell is determined, interpolation within the cell is done the same way as the uniform case.

In between the totally unstructured configuration of point cloud, and the totally structured configuration of a rectangular grid lies an "adaptive rectangular grid " 112. An adaptive rectangular grid still employs rectangular grids (possibly non-uniformly sampled) on subspaces, but these grids are not compatible as a whole. Adaptive sampling is useful to reduce the sampling rate, that is, increase the storage efficiency, in a region of the color space that is less important. For example, in the standard IT8.7/3 target for CMYK printers, sampling on each CMY "plane" for a fixed K is uniform rectangular, but the sampling rate is successively reduced as K increases, because the colors get darker and variations become smaller to make high sampling rate wasteful.

A traditional approach to performing interpolation on an adaptive rectangular grid is to use SLI. In one step, an n-dimensional interpolation is reduced to two (n-1)-dimensional interpolations and a 1-dimensional interpolation, and the same procedure can be applied to each of the (n-1)-dimensional interpolation problems, hence the name "sequential".

Several things are not desirable about SLI:

1. SLI does not preserve all the symmetries. In fact, suppose the grid is uniformly rectangular, and SLI is applied all the way to dimension 1. This results in the same result as multilinear interpolation (usually called cubic interpolation in the case of 3 dimensions). Points on the principal diagonal are interpolated using all the corner points of the cube. This is not desirable if the principal diagonal is the gray axis (as in RGB space) because one prefers grays to be interpolated using sampling points on the gray axis only.

2. The SLI step is also not necessarily compatible with the interpolation used on sandwiching planes. For instance, if tetrahedral interpolation is used on each sandwiching plane, then SLI produces a "hybrid" that is "bilinear", linear on each sandwiching plane, and linear in the transverse direction between them. True tetrahedral interpolation in the full dimension would be linear in each subdividing tetrahedron.

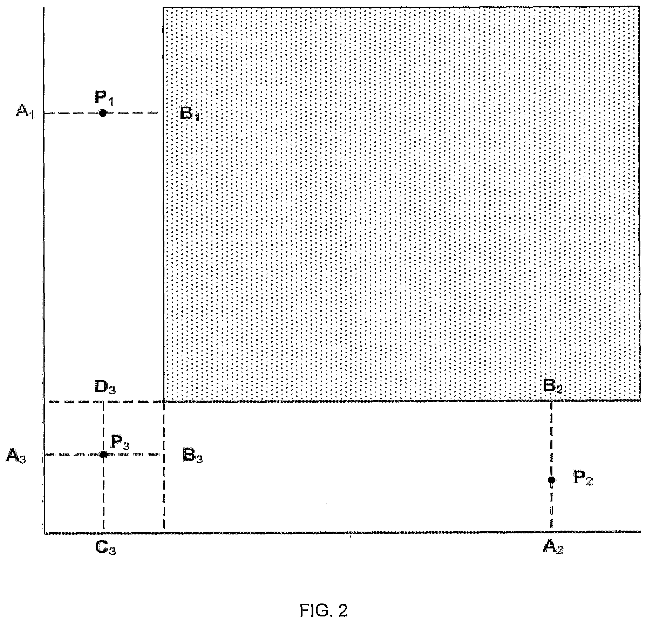

3. SLI handles the basic geometrical configuration with 2 sandwiching linear hyperplanes where the hyperplanes are provided by n-1 coordinates and the transverse direction to the hyperplanes provided by the remaining coordinate. There are other more complicated geometrical situations which SLI cannot handle, or can do so only awkwardly. One scenario is the "gap interpolation problem" between incompatible grids in different dimensions. FIG. 2 depicts a simple 2-dimensional situation in a $x_1x_2$ space where the interior of the space is covered a rectangular grid, and each of the $x_1$ and $x_2$ axis is covered by different 1-D grids, and furthermore these grids are not compatible. To interpolate in the gap space, consider the three input points $P_1$, $P_2$ and $P_3$. While $P_1$ and $P_2$ can probably be handled by SLI as indicated in the figure, there is no natural way to handle $P_3$. One possibility is to try and apply SLI in the $x_1$ direction, interpolating between $A_3$ and $B_3$, where $B_3$ itself needs to be interpolated first. Another possibility is to apply SLI in the other direction, ending in an interpolation between $C_3$ and $D_3$. Worst of all, one may get different results from each approach. Clearly, when the sandwiching geometric objects are more complicated than linear hyperplanes, SLI is not an ideal tool.

Therefore, a need exists for a color conversion system for color printers having a large number of input channels that yields accurate color conversions that is computational manageable and yet manages geometrically complex LUTs. Various aspects of the present invention meet such a need.. Various aspects of the present invention meet such a need.

Document US 2002/0113982 A1 discloses a method of determining colorant amounts to be laid down in a color printer includes determining an initial set of cyan, magenta and yellow (CMY) values; ordering the initial set of CMY values to determine the largest, middle and smallest values of the three values and generating an ordering vector; selecting a gamut center black generation LUT and two gamut boundary black generation LUTs from a set of black generation LUTs from a selection table; indexing the selected black generation LUTs to determine black values for each black generation LUT as a function of the minimum of the CMY values; interpolating a final output black colorant amount from the black values, and interpolating final output CMY colorant amounts from the TO initial set of CMY values, the maximum CMY ink limit constraint, and a set of boundary threshold values.

Non-Patent Literature J. Z. Chang et. al., "Recent Results in Color Calibration Using Sequential Linear Interpolation", IS&T's, 47th Annual Conference/IPCS, 1 January 1994, pages 500-505, discloses the sequential linear interpolation (SLI) method for performing calibration of color devices. The SLI method works by building a structured lookup table with nonuniformly spaced grid points. Theoretical results and preliminary numerical simulations indicated that the method could substantially reduce the error for a fixed number of grid points by allocating more grid points to the region where the device is most nonlinear. This pager presents current results in the full implementation of SLI to the calibration of a color printer. The SLI technique is first applied to efficiently characterize the color device. Then, the SLI is implemented to transform the input color vectors in a chosen device-independent color space to the printer-specific input color space. Actual data measured from color printers are used for the implementation, and the SLI method is shown to substantially reduce both average and maximum errors over the gamut of the printer.

Non-Patent Literature C. A. Hall et. al., "Transfinite Interpolation of Steam Tables", Journal of Computational Physics, vol. 18, no. 1, 1 May 1975, pages 79-91 it is disclosed that in engineering practice, a real time simulation, reactor accident analysis, etc. is often necessary to obtain very accurate but simple relationships between steam and water properties with minimum computer storage requirements. The notion of "transfinite element", developed by Gordon and Hall, is used as a basis for an interpolation scheme which gives simple functional relationships between steam and water properties, such as enthalpy, considered as a function of pressure and temperature.

In document US 2003/0095638 A1 a description is given of a method and a device for the calibration of an image pick-up device which is sensitive to magnetic fields and for the imaging by means of such an image pick-up device. The image pick-up device is notably an image intensifier in X-ray systems such as, for example, systems provided with a C-arm. Calibration is performed essentially by forming and storing a look-up table whereby a plurality of magnetic field data acting on the image pick-up device is associated with calibration data required for correcting the distortions caused thereby. During imaging, the magnetic field data acting on the image pick-up device during the formation of an image is measured and the calibration data associated with this magnetic field data in the table is read out and used for the correction of the acquired image.

## SUMMARY OF THE INVENTION

A method and apparatus for color conversion useful for color devices having a large number of input channels, for example CMYK color printers having additional inks used to enhance the color printer's gamut, are provided. The color conversion is performed using a strata collection of look-up tables that stratify an n-dimensional color space into sets of lower dimensional subspaces. For lower dimension subspaces, the associated look-up tables may be closed and have a uniform grid structure. For a higher dimension subspace, an associated look-up table may be open, leaving gaps of the subspace not enclosed by the look-up table, and may have a non-uniform grid structure. A color management module using the strata collection for color conversion may determine if a color conversion is for a color value that falls within a gap. If so, the color management module may use a relatively complex interpolation process. If not, the color management module may use a relatively simple interpolation process.

In one aspect **(not claimed),** a unit cube in an n-dimensional color space is stratified into a set of LUTs that span the unit cube, each LUT mapping from the color space to a second color space. In the method, a set of strata collections is defined for the n-dimensional color space, wherein, for each dimension k where k = 3 to n dimensions, a strata collection is defined having n-choose-k LUTs. Each LUT has k inputs and at least some of the LUTs have a grid structure different from the other LUTs. Furthermore, the grid structure for higher dimension LUTs are less dense than lower dimension LUTs. The LUTs within the set of strata collections are then populated using color values from the second color space.

In another aspect, for each subspace of dimension 3, each LUT is closed and the grid structure for each LUT is uniform.

In another aspect, for each subspace of dimension 4, at least one LUT is closed and all other LUTs are open.

In another aspect, the grid structure for each closed LUT is uniform and the grid structure for each open LUT is nonuniform.

In another aspect, nonuniform grid structures are based on an array of specified device values.

In another aspect, for subspaces having greater than four dimensions, all of the LUTs are open.

In another aspect, the set of strata collections are used in a color management module. A color conversion process within the color management module uses a first interpolation process for closed LUTs and interior portions of open LUTs and uses a second interpolation process for spaces between an open LUT and a lower dimensional subspace. In this **aspect,** the second interpolation process is more computationally complex than the first interpolation process.

In another aspect, a "super-grid" approach may be used to ameliorate the adverse affects of scenarios 1 and 2 from above; however, such an approach is best suited when there are rectangular grids in "codimension 1" spaces, which in that application are the CMY spaces. The present invention is related to the super-grid approach, although it does not use super grids. The present inventions handles scenario 3 from above easily. To do so, the present invention involves an interpolating step (herein termed a "barycentric projection") so the present invention can also be "sequentialized" to produce an interpolation scheme which can be called "Sequential Tetrahedral Interpolation" (STI).

In another aspect, a unit hypercube enclosing the input value is generated based on values from a look up table. A set of boundary conditions are then imposed on the unit hypercube. To perform the actual interpolation, an initial barycentric projection is performed from a selected vertex of the unit hypercube through the input value onto a boundary of the unit hypercube. If the projection satisfies one of the boundary conditions, an interpolated value is calculated using the projection by back substitution. If the initial projection does not satisfy a boundary condition, an intermediate value is generated from the previous projection and successive barycentric projections are performed using respectively different vertices of the unit hypercube through intermediate values onto a boundary of the unit hypercube until a projection satisfies one of the boundary conditions. An interpolated value is then generated by back substitution using the initial and successive projections.

**In an aspect of the invention, a method of and an apparatus for determining an interpolated value for a color space according to claim 1 is provided.**

The method includes generating a unit hypercube enclosing an input value. A set of boundary conditions is then imposed on the unit hypercube. A series of barycentric projections are performed from respectively different vertices of the unit hypercube through the input value or intermediate values onto a boundary of the unit cube until a projection satisfies one of the boundary conditions. Once a boundary condition has been satisfied, the interpolated value is generated by back substitution using the series of barycentric projections.

In another aspect of the invention, the boundary conditions include a discrete boundary condition. The discrete boundary condition may be associated with a vertex of the unit hypercube.

In another aspect of the invention, the boundary conditions include a continuous boundary condition. The continuous boundary condition is associated with a facet of the hypercube.

In another aspect of the invention, the boundary conditions include a first continuous boundary condition associated with a first facet of the unit hypercube and a second continuous boundary condition associated with a second facet of the unit hypercube and the continuous boundary conditions agree at an intersection of the first facet and the second facet.

In another aspect of the invention, a simplex enclosing the input value is determined. In this embodiment of the invention, the simplex is enclosed by the hypercube and a barycentric projection is performed using a vertex of the simplex.

In another aspect of the invention, an intermediate value used in a barycentric projection is determined from a previous barycentric projection.

This brief summary has been provided so that the nature of the invention may be quickly understood. A more complete understanding of the invention may be obtained by reference to the following detailed description in connection with the attached drawings.

BRIEF DESCRIPTION OF THE DRAWINGS

FIG. 1 is a block diagram illustrating use of a LUT by a color device to map from one color space to another.

FIG. 2 depicts a simple 2-dimensional situation in a $x_1 x_2$ space where the interior of the space is covered a rectangular grid, and each of the $x_1$ and $x_2$ axis is covered by different 1-D grids, and furthermore these grids are not compatible.

FIG. 3 illustrates transformation of color values between a higher dimensional color space and other color spaces in accordance with an example useful for understanding the present invention.

FIG. 4 is a process flow diagram of a process used to determine the number of steps $d$ for closed LUTs and also number of steps and node locations for open LUTs of an example useful for understanding the present invention.

FIG. 5 is a process used to generate LUTs using user specified sampling locations in accordance with an exemplary embodiment of the present invention.

FIG. 6 is a block diagram of an interpolation module in accordance with an exemplary embodiment of the present invention.

FIG. 7 is a block diagram of a stratum selector in accordance with an exemplary embodiment of the present invention.

FIG. 8 is a block diagram of a $k$-dim stratum selector in accordance with an exemplary embodiment of the present invention.

FIG. 9 is a process flow diagram of an interpolation process used by an interpolator in accordance with an exemplary embodiment of the present invention.

FIG. 10 is a block diagram of a data processing system, such as a computer coupled to color devices and having a color management module, that may be used to host an interpolation module in accordance with an exemplary embodiment of the present invention.

FIG. 11 is a process flow diagram of an interpolation process used by a color device to map input color values in one color space to output color values in another color space in accordance with an exemplary embodiment of the present invention.

FIG. 12 illustrates an example interpolation in accordance with an exemplary embodiment of the present invention.

FIG. 13 to FIG. 15 illustrate an example interpolation in accordance with an exemplary embodiment of the present invention.

FIG. 16 illustrates an example of how an interpolation process in accordance with an exemplary embodiment of the present invention manages interpolation between two hyperplanes having incompatible grids.

FIG. 17 is an illustration of an interpolation process for an input value that falls in a "gap" in accordance with an exemplary embodiment of the present invention.

FIG. 18 is a block diagram of a data processing system, such as a color device, that may be used to host an interpolation process in accordance with an exemplary embodiment of the present invention.

## DETAILED DESCRIPTION

**Examples useful for understading the** invention **are** directed to a method of interpolation using LUTs in any arbitrary n-dimensional color space. However, throughout the detailed description, examples are given for 2-dimensional and 3-dimensional spaces, it being understood that the interpolation process may be performed in any n-dimensional color space. Therefore, the following terminology is used in order to identify the types of geometric objects representing the manipulations performed during the interpolation process:

A hypercube is a generalization of a measure polytope, such as a 3-cube, to n dimensions. Hypercubes of lower dimension have specific names. For example, a 1-hypercube is a line segment, a 2-hypercube is a square, a 3-hypercube is a cube, and a 4-hypercube is a tesseract.

A simplex is a generalization of a tetrahedral region of space to n dimensions. The simplex is so-named because it represents the simplest possible polytope in any given space. For example, a 2-simplex is an equilateral triangle, a 3-simplex is a tetrahedron, a 4-simplex is a pentatope, etc.

Other generalizations are represented in the following table:

| 2-D | 3-D | 4-D | general |
|---|---|---|---|
| circle | sphere | glome | hypersphere |
| square | cube | tesseract | hypercube |
| equilateral triangle | tetrahedron | pentatope | simplex |
| polygon | polyhedron | polychoron | polytope |
| line segment | plane | hyperplane | hyperplane |
| square | octahedron | 16-cell cross | polytope |
| polygon edge | face | facet | facet |
| area | volume | content | content |

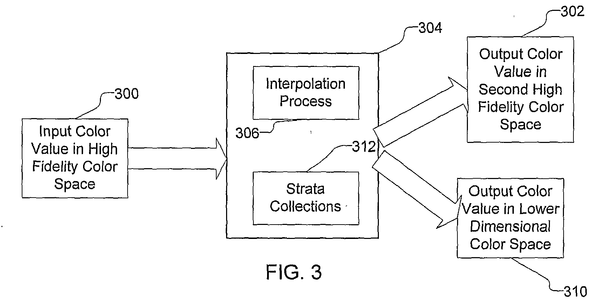

FIG. 3 illustrates transformation of color values between a high fidelity color space and another color space in accordance with an exemplary embodiment of the present invention. The present invention may be applied to color transformations from a high fidelity color space to another high fidelity color space or a color space having fewer dimensions. Accordingly, an input color value 300 in a high fidelity color space can be transformed into a second color value 302 in a second high fidelity color space. Alternatively, the input color value can be transformed into a color value 310 in a lower dimensional color space. To do so, a data processing system uses an interpolation module 304. The interpolation module includes an interpolation process 306 that receives the first color value and uses a set of LUTs 312, herein termed a strata collection, to generate the second color value through interpolation.

In the above-described scenario, a uniformly sampled LUT maybe used instead of the strata collections during the interpolation process. While a uniformly sampled LUT results in a simple and efficient interpolation process, such an approach imposes large memory requirements as the dimensionality of the color spaces goes up, sometimes referred to as "the curse of dimensionality." However, in reality, while a color device may have six or eight channels, these channels are rarely used simultaneously, for example, because of an ink coverage problem. Therefore, a simplifying assumption is that in most cases, the input color value to color value transformation has only a few "active" colorants and so the transformation actually resides in a lower dimensional color space. This also means that interpolation can be done more efficiently in that lower dimensional space because interpolation is faster the lower the dimension of the color space used.

Therefore, in accordance with various embodiment of the present invention, the whole device color space is stratified into subspaces of various dimensions. And because lower dimensions (combinations of three or four colorants mostly) are more important, by stratifying the color space, one can also use different sampling rates (for example, different number of steps) on the different portions of the stratified color space, such as increasing sampling rates for lower dimensional portions and reducing sampling rates for higher dimensional portions.

In order to describe the transformations in accordance with exemplary embodiments of the present invention, the following notation is used herein. $n$ is the number of channels in the source color space of the color transformation that one wants to sample. In addition, one can simply refer to $n$ as the input dimension, and $n \geq 5$ unless otherwise specified.

The basic building blocks of the strata collections are LUTs of various input dimensions and sizes, instead of one uniformly sampled LUT with input dimension $n$. To be precise, a "LUT", as used herein, is a rectangular lattice imposed on a unit hypercube, that is, all the color space coordinates are normalized to the range [0, 1]. If $v$ is the input dimension of the LUT (note that $v$ in general does not need to be equal to $n$, although all $v \leq n$), then the LUT consists of $v$ one-dimensional sampling grids:

$$\mathrm{Samp}_i\colon x_1, x_2, \ldots, x_{d(i)}$$

where all the $x_j$'s lie in the range [0, 1], are strictly increasing with $j$, $d(i) \geq 1$ is the number of steps for the $i$th channel sampling, and $x_{d(i)}$ is 1. On the other hand, $x_1$ is not required to be 0.

As used herein, there are two special cases of LUTs as defined below.

A "Closed LUT" is a LUT with the additional requirement that for each $\mathrm{Samp}_i$, $x_1 = 0$, and $d(i) \geq 1$. That is, the LUT is at least defined on all boundary faces of the unit hypercube. Furthermore, a uniform closed LUT is a closed LUT that has the same number of steps $d(i)$ for each channel, and the nodes are uniformly spaced between 0 and 1.

An "Open LUT" is a LUT with the additional requirement that for each $\mathrm{Samp}_i$, $x_1 > 0$. That is, an open LUT is not defined on the boundary faces of the unit hypercube that contain the origin. Furthermore, it is permissible to have only one step, that is, *d(i)* =1.

**In one example useful for understanding** the present invention,
the unit hypercube [0, 1]" is stratified into a collection of closed LUT's and open LUT's such that the whole collection of LUTs will cover the unit hypercube. It is conceptually simpler to organize these "LUT strata" by their dimension, so that on the top level one can write:

$$[0,1]^n = \bigcup_{k=3}^{n} \Sigma_k$$

where $\Sigma_k$ is the "*k*-dimensional strata collection." Note that the stratum dimension *k* starts from three instead of zero, which would correspond to points. This is because handling interpolation of three-colorant combinations is quite efficient without too much memory requirement. However, it is to be understood that lower dimensional strata collections are possible.

**In one example useful for understanding** the present invention,
$\Sigma_3$ consists of closed LUT's with three inputs, one from every possible combination of three colorants chosen out of the *n* colorants. In addition, $\Sigma_4$ consists of 1 closed LUT's for the combination CMYK (or the first four colorants), together with $\binom{n}{4} - 1$ open LUT's for all other four-colorant combinations. This is because the CMYK combination is an important combination as it is the basis of most color printers. Finally, for *k=5,...,n*, $\Sigma_k$ consists of $\binom{n}{k}$ open LUT's, one for each possible combination of choosing *k* colorants from the total of *n* colorants.

After establishing the nature of the LUTs, it remains to specify the sizes of the LUTs. One difference between open and closed LUT's is that open LUT's don't overlap with each other, whereas closed LUT's may overlap with each other at the boundary faces. The fact that the 1-D sampling in an open LUT does not contain "0" essentially means that an open LUT is missing half of the boundary faces, hence the name "open". If two LUTs don't overlap, one is free to use different number of steps and node locations in each channel. The same is not true if two LUTs overlap. In that case, if the number of steps and/or node locations are different, a point lying in the intersection of the two LUTs will receive a different interpolation value depending on which LUT is used in the interpolation. In one embodiment of the present invention, uniform sampling is used with the same number of steps whenever two LUT's overlap.

To summarize, all closed LUT's (all 3-colorant LUT's and the CMYK LUT in the present embodiment) are uniform, and have the same number of steps, which is denoted *d*.

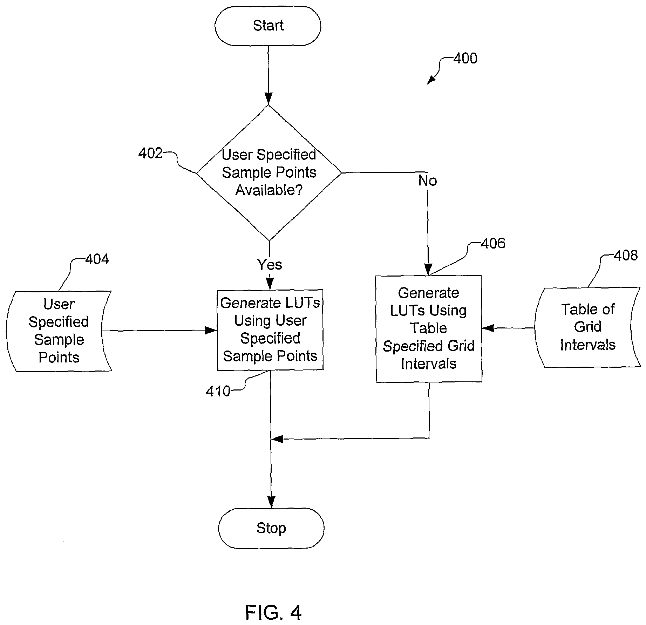

FIG. 4 is a process flow diagram of a process used to determine the number of steps *d* for closed LUTs and also the number of steps and node locations for open LUTs in accordance with the present invention. In the process 400, there are two distinct processing modes, dependent on whether or not a user is supplying sampling points. The process determines (402) if the user is supplying sample points 404. If not, the process generates (406) closed LUT's as uniform LUTs with *d* number of steps as described in a table 408, exemplary contents of which are illustrated in Table 1 below:

**Table 1**

|  | Proof mode | Normal mode | Best mode |
|---|---|---|---|
| **Number of Steps, *d*** | 9 | 17 | 33 |

All the open LUT's of dimension *k* will have the same number of steps *d(k)* in each input channel, and the nodes are equally spaced, that is, for each *i=1,2,...,k,* the 1-D sampling grid is:

$$\mathrm{Samp}_i : 1/d(k), 2/d(k), ..., (d(k)-1)/d(k), 1$$

In this leg of the process, *d(k)* is specified in a portion of table 408, exemplary contents of which are illustrated in Table 2 below:

**Table 2**

| | Proof mode | Normal mode | Best mode |
|---|---|---|---|
| **Number of Steps for four channels, $d(4)$** | 5 | 7 | 9 |
| **Number of Steps for five channels, $d(5)$** | 2 | 3 | 3 |
| **Number of Steps for six channels, $d(6)$** | 2 | 3 | 3 |
| **Number of Steps for seven channels, $d(7)$** | 2 | 2 | 2 |
| **Number of Steps for eight or more channels, $d(k)$** | 2 | 2 | 2 |

The three modes, "proof", "normal" and "best", are quality settings that normally exist in Color Management Module (CMM) software allowing a user to choose a quality based on the user's application. In the exemplary embodiment of the present invention, the proof mode has the smallest memory footprint, while best mode has the largest.

If it is determined that a user wants to supply sampling points, the process generates (410) LUTs using an external input in the form of a list of "important" sampling locations. This leg of the process is more adaptive than the table driven leg, and can also save more memory space.

The external input is an array of device values supplied by the user. These device values will indicate which region of the device color space is important, that is, which region of the device color space should be sampled at a higher density or rate.

As before, all the closed LUTs generated by this leg of the process will be uniform with $d$ number of steps as described in Table 1 from above. However, each open LUT can have a different number of steps in each input channel, and the sampling locations do not need to be equally spaced.

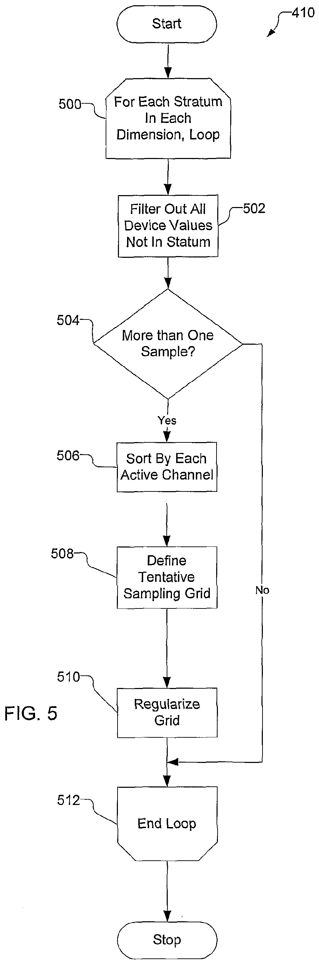

FIG. 5 is a process used to generate LUTs using user specified sampling locations in **accordance with an example useful for understanding**

the present invention. For a given open LUT stratum, there is associated with it a colorant combination, say $c_1,...,c_k$ where the $c_i's$ are distinct integers between 1 and $n$. They are the channel indices corresponding to the colorants that are "active" in this stratum.

A LUT process generation process 410 loops (500 to 512) for each stratum in each dimension $k$, that is, for each of the active channels indexed by $i=1,2,...,k$, performing the following steps.

The process filters (502) out from an input array of user specified sampling points all device values that are not contained in the stratum being processed. A device value $(x_1, x_2, ..., x_n)$ is contained in the stratum if and only if and all other channels are zero. If the filtered set has $N$ entries, let $d_{tentative} = \min(d(k),\max(1,int(N^{1/k})))$ where $d(k)$ is also given by Table 2 from above. $d(k)$ imposes an upper bound on the size of the LUT so that, if $N$ is large, that is, there are a lot of samples in this stratum, the size of the LUT doesn't go out of control. At the other extreme, if $N = 0$, a one-step LUT is used.

The process determines (504) If $d_{tentative} = 1$, $Samp_i$ has only 1 point, which is set to 1.0, as it must be. If so, the process continues to the next stratum, otherwise, the process continues processing.

The process then sorts (506) the filtered samples in ascending order in the $c_i$ th channel.

Once the filtered samples are sorted, the process defines (508) the "tentative" sampling grid for the $i$th active channel ($c_i$ th in the full device space) using the nodes

$$x_j = (j\text{-}1) \cdot 100/(d_{tentative} - 1)\text{percentile where } j=1,2,...,d_{tentative}.$$

The process regularizes (510) the tentative grid to ensure that the grid conforms with strict monotonicity and also that the grid ends with 1.0. Because the filtered samples are already sorted in the $c_i$th channel, the nodes in the tentative grid are already monotonic non-decreasing. However, adjacent nodes might be identical. This can be corrected by removing identical nodes if necessary. Finally, after this procedure, if the end point is less than 1.0, it is replaced by 1.0.

Note that the regularizing process may result in a LUT stratum having a different number of steps in each channel, because after the regularization, the number of steps in a channel may be less than $d_{tentative}$.

At the end of the stratification process, using either table values or values supplied by a user, the unit hypercube is stratified by a strata collection having open and closed LUT strata.

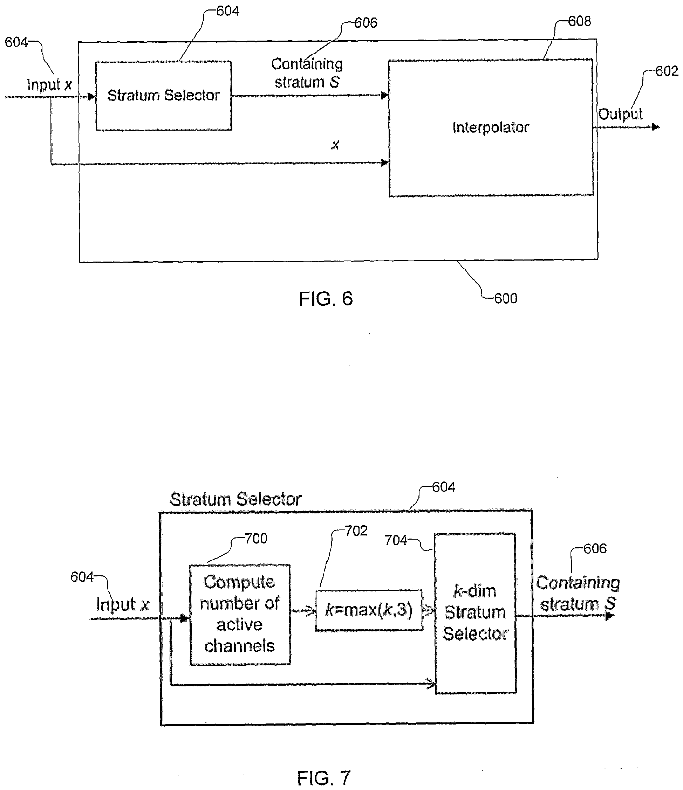

FIG. 6 is a block diagram of an interpolation module in accordance with an exemplary embodiment of the present invention. An interpolation module 600 uses a strata collection to generate an output color value 602 from an input device value 604. To generate the output color value, the interpolation module receives the input device value which is given by a set of channel values, namely $(x_1,x_2,...,x_n)$. The interpolation module uses a stratum selector 604 to select a stratum 606 from the strata collection containing the input device value. The containing stratum and the input device value are then used by an interpolator 608 to generate the output color value.

FIG. 7 is a block diagram of a stratum selector in accordance with an exemplary embodiment of the present invention. The stratum selector 604 computes (700) the number of "active" channels. This is simply the number of non-zero channels in the input device color. This determines the strata dimension k in which the stratum selector searches for the containing stratum. More precisely, the stratum selector sets (702) the strata dimension as 3 if the number of active channels is ≤3, otherwise the strata dimension is the same as the number of active channels. The stratum selector then uses a *k*-dim stratum selector 704 to select the individual stratum to be used in an interpolation.

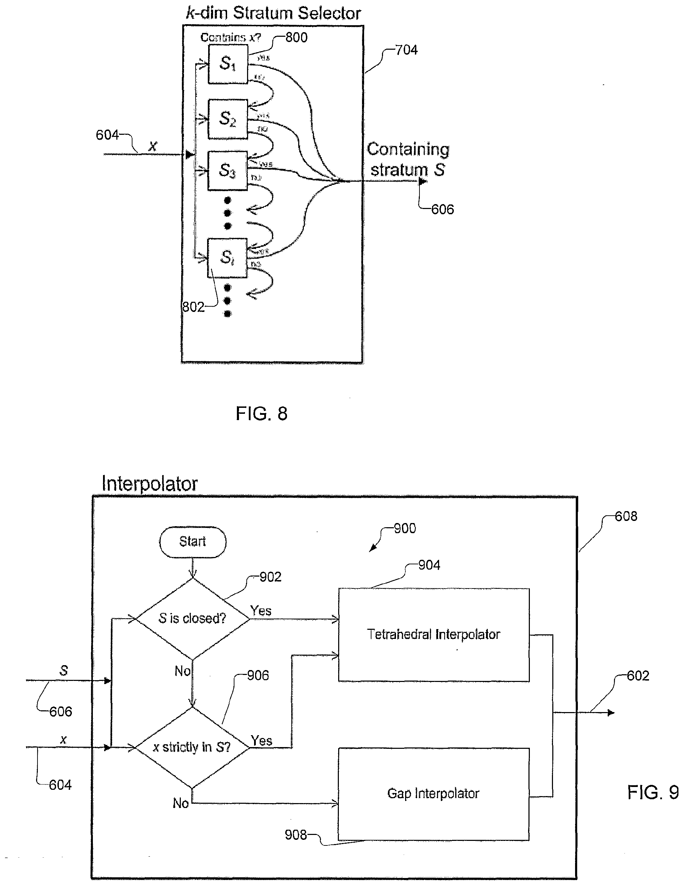

FIG. 8 is a block diagram of a *k*-dim stratum selector in accordance with an exemplary embodiment of the present invention. The *k*-dim stratum selector 704 searches within the strata collection, $\sum_k$, for the stratum containing the input device value. A device value is contained in an open stratum if all the channels corresponding to the stratum have non-zero value, and all other channels are zero. A device value is contained in a closed stratum if the device value is 0 in every non-active channel for the stratum. The *k*-dim stratum selector determines if the device value is in a first stratum, $S_1$ 800. If not, the *k*-dim stratum selector tries each stratum, $S_i$ 802, in succession until it finds a containing stratum. If no containing stratum is found, the *k*-dim stratum selector aborts and reports a failure. If a containing stratum 606 is found, an interpolated output value can be generated from the input device value and the containing stratum.

FIG. 9 is a process flow diagram of an interpolation process used by an interpolator in accordance with an exemplary embodiment of the present invention. An interpolator 608 (of FIG. 6) uses an interpolation process 900 to generate an output color value 602 from an input device value 604 and a containing stratum 606. The interpolator determines (902) if the containing stratum is closed. If so, interpolation within can be done by a conventional interpolation process that works for nodes in a hypercube. In one embodiment of the present invention, a tetrahedral interpolator 904 is used. If the interpolator determines (906) that the containing stratum is open, and the device value lies strictly within the stratum, that is, value of the first node in the *i*th channel for every index *i* that corresponds to an active channel of the stratum, then the same, standard, interpolation process (such as the process used by the tetrahedral interpolator) can be used.

If, on the other hand, if $x_i$ < the value of the first node in the *i*th channel for some active channel index i, then the device value falls into a "gap" between the stratum and the lower dimensional subspaces. Any process that is capable of interpolating within this gap, such as a gap process used by gap interpolator 908, can be used, although a preferred gap interpolator uses a transfinite interpolation algorithm as described below. Typically, a process that is capable of performing such an interpolation is more complex than any of the conventional interpolation processes, such as one using a tetrahedral interpolation algorithm.

Use of strata collections to span a unit hypercube during a color conversion process for a high-fidelity color has several advantages as compared to use of a single uniform LUT. As explained earlier, the resultant sparse LUT structure is able to achieve reasonably dense sampling in regions of the device space that contain important combinations of colorants, while keeping in check the total size of LUT's needed. Table 3 below shows a comparison of the number of nodes needed for the present sparse LUT implementation (using the table driven LUT generation process as described above) and the corresponding uniform LUT implementation. As can be seen from the table, use of the present sparse LUT system results in smaller, and therefore more manageable, LUT sizes.

| Number of input channels | Sparse LUT structure (normal mode) | Uniform LUT (17 steps) |
|---|---|---|
| 5 | 142498 | 1419857 |
| 6 | 217582 | 24137569 |
| 7 | 347444 | 410338673 |
| 8 | 559618 | 6975757441 |

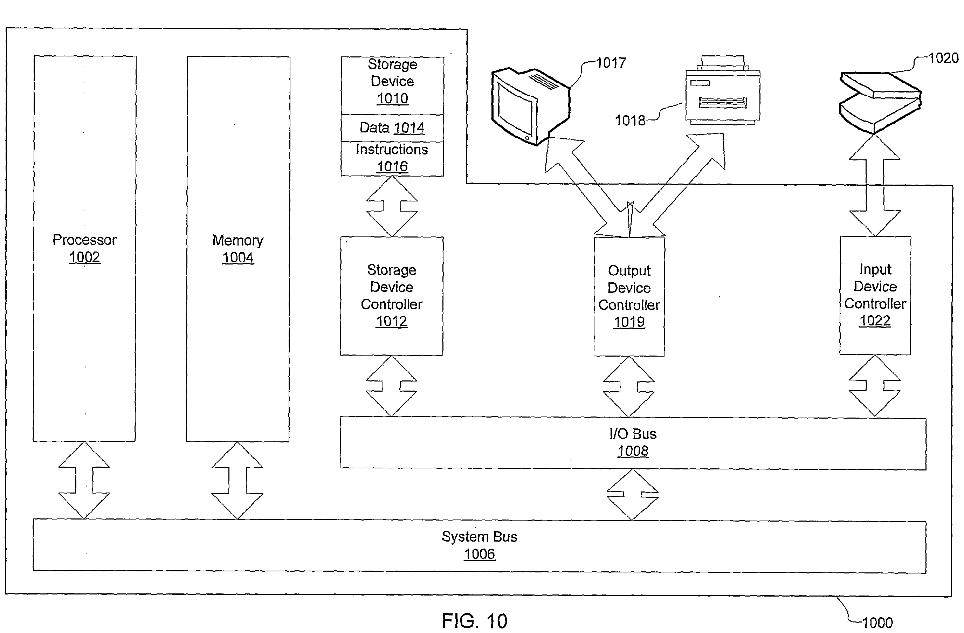

FIG. 10 is a block diagram of a data processing system, such as a computer coupled to color devices and having a color management module, that may be used to host an interpolation module as described above in accordance with an exemplary embodiment of the present invention. The data processing system 1000 includes a processor 1002 coupled to a memory 1004 via system bus 1006. The processor is also coupled to external Input/Output (I/O) devices via the system bus and an I/O bus 1008. A storage device 1010 having computer system readable media is coupled to the processor via a storage device controller 1012 and the I/O bus and the system bus. The storage device is used by the processor to store and read data 1014 and program instructions 1016 used to implement an interpolation process as described above. The processor may be further coupled to color output devices, such as computer display 1017 and color printer 1018, via an output device controller 1019 coupled to the I/O bus. The processor may also be coupled to a color input device, such as color scanner 1020, via an input device controller 1022.

In operation, the processor loads the program instructions from the storage device into memory. The processor then executes the loaded program instructions to receive an input color value in a first color space, such as a color value meant for use by the color printer. The processor then executes the program instructions to generate an output color value in a second color space, such as a color value for use by the display, as described above.

A basic step in using a rectangular grid as a LUT is interpolation within an enclosing cell. For any input value, the input value's enclosing cell is easily determined. In the case of rectangular grid, the output value at each of the vertices (corner points) of the enclosing cell is specified, and they are also the only boundary conditions (BCs) that an interpolant must satisfy, that is, the interpolant has to pass through all these points. Note that these boundary conditions are on "discrete" points, in this case the 2" corner points of the cell, where n is the dimension of the color space.

Boundary conditions may be formalized as follows. For any subset S of the boundary of the enclosing cell, which will herein be taken as a unit hypercube in n dimensions, a boundary condition on S is a specification of a function BC: $S \rightarrow \mathbf{R}^m$, where $m$ is the output dimension. In other words, an interpolant, which may be denoted Interp: $[0, 1]^n \rightarrow \mathbf{R}^m$, is required to satisfy: Interp($\mathbf{x}$) = BC($\mathbf{x}$) for all $\mathbf{x}$ in $S$. In the standard scenario of interpolation on the unit hypercube, $S$ is the set of discrete points that are the $2^n$ vertices of the hypercube.

The following generalization of boundary conditions can solve the issues described above, resulting in a new interpolation algorithm within the unit hypercube. Instead of allowing only discrete boundary points, boundary conditions may be imposed on a whole boundary facet of the hypercube. The precise assumptions are as follows:

(a) The point $\mathbf{v}_n = (1,1,...,1)$ is special and only a discrete boundary condition is allowed. In other words, no continuous boundary conditions can be imposed on the $n$ boundary facets $x_i = 1$ ($i=1,...,n$).

(b) For each of the remaining $n$ boundary facets $x_i = 0$ ($i=1,...,n$). boundary condition may be imposed on the whole facet, with the compatibility condition that if two facets intersect, the boundary conditions on the facets should agree on the intersection.

(c) Any vertices not contained in the facets with a boundary condition will have an individual (discrete) boundary condition.

As used herein, a discrete boundary condition is termed "finite data," and a continuous boundary condition is termed "transfinite data." Therefore, the interpolation procedures described here are interpolations on finite and transfinite data.

The following description of tetrahedral, or simplex, interpolation helps to set the notations used for the description of the present invention. It is known that the unit hypercube $[0, 1]^n$ can be subdivided into $n!$ simplexes, parametrized by the set of permutations on $n$ symbols. More specifically, each such simplex is defined by a set of inequalities $x_{\sigma(1)} \geq x_{\sigma(2)} \geq ... \geq x_{\sigma(n)}$ where $\sigma: \{1,2,..,n\} \rightarrow \{1,2,...,n\}$ is a permutation of "symbols" 1, 2, ..., $n$, i.e. it is a bijective mapping of the set of $n$ symbols. For example, if $n = 3$ and one uses the shorthand $\sigma = <3, 2, 1>$, meaning $\sigma(1)=3$, $\sigma(2)=2$, $\sigma(3)=1$, then the corresponding simplex is defined by $z \geq y \geq x$, where one uses the common notation $x, y, z$ for $x_1, x_2, x_3$. Also note that these simplexes are not disjoint from each other, but for the purpose of interpolation, points lying on a common facet of 2 distinct simplex will have the same interpolation value regardless of which simplex is used in the interpolation.

Conventionally, in interpolating on finite points, for a given input point ($x_1, ..., x_n$), an interpolation process first determines which simplex the input point lies in, or equivalently the corresponding permutation $\sigma$, by checking the inequalities one simplex by another. Then the simplex interpolant is defined as:

$$Interp(\mathbf{x}) = BC(\mathbf{v}_0) + \sum_{i=1}^{n} x_i \left[ BC(\mathbf{v}_i) - BC(\mathbf{v}_{i-1}) \right]$$

where $\mathbf{v}_0 = 0$, $\mathbf{v}_i = \sum_{j=1}^{i} \mathbf{e}_{\sigma(j)}$ for $i=1, ..., n$, and $\mathbf{e}_1, ..., \mathbf{e}_n$ are the standard basis vectors. Note that $\mathbf{v}_0, \mathbf{v}_1, ..., \mathbf{v}_n$ are the vertices of the simplex, and

$1 - x_{\sigma(1)}, x_{\sigma(1)} - x_{\sigma(2)}, x_{\sigma(2)} - x_{\sigma(3)}, ..., x_{\sigma(n)}$ are the "barycentric coordinates" with respect to the vertices.

However, such a conventional tetrahedral interpolation process cannot handle cases where the boundary conditions are continuous rather than discrete. In contrast, the present invention utilizes a generalization of tetrahedral interpolation capable of handling mixed discrete and continuous boundary conditions. The resultant process, when applied to the case of an interpolation utilizing all discrete boundary conditions, results in a series of barycentric projections and backward substitutions that result in the same answer as that given by the conventional approach.

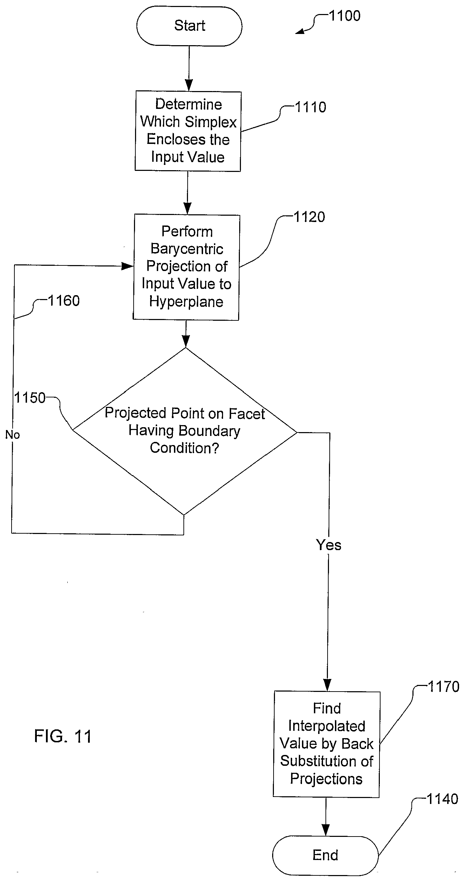

FIG. 11 is a process flow diagram of an interpolation process used by a color device to map input color values in one color space to output color values in another color space in accordance with an exemplary embodiment of the present invention. The process 1100 uses barycentric projections for a general case of BC's on boundary facets of a unit hypercube. Initially, for a given input value $(x_1, ..., x_n)$, the interpolation process first determines (1110) which simplex the input value lies in, or equivalently, the corresponding permutation $\sigma$. Then the interpoloation process performs (1120) a series of barycentric projections as follows.

The first projection $\text{BProj}_1(\mathbf{x})$ sends the input value to the plane $x_{\sigma(1)} = 0$ unless the input value is already at a vertex, or $\mathbf{x} = \mathbf{v}_n$, in which case the input value is not changed. The precise definition of the map $\text{BProj}_k$ is defined as follows:

$$\text{BProj}_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases}$$

with $\mathbf{p}_k = \mathbf{v}_n - \sum_{i=1}^{k-1} \mathbf{e}_{\sigma(n+1-i)}$ and $k = 1,2,...,n$. In the case $x \neq \mathbf{v_n}$, it is clear that $\text{BProj}_1(\mathbf{x})$ has the $\sigma(1)$th component annihilated. In other words, the projected point, or intermediate color value, is on one of boundary facets. The interpolation process next determines (1150) if the projected point is on a facet on which a BC is defined, in which case the interpolation process can stop making projections. Otherwise, the interpolation process performs (1160) another barycentric projection $\text{BProj}_2(\mathbf{x}')$ where $\mathbf{x}' = \text{BProj}_1(\mathbf{x})$. If the next projected point is on a vertex or on a facet on which a BC is defined, the interpolation process can stop making projections. Otherwise the interpolation process performs yet another projection. Because every projection annihilates one component, the effective dimension decreases, so that the interpolation process must eventually stop - in the worst case scenario the interpolation process will perform $n$ projections down to dimension 0, i.e. vertices on the hypercube, which by assumption (c) above, will have a BC defined on them.

Assuming that $K$ projections have been performed, with $\mathbf{x}^{(k)} = \text{Bproj}_k(\mathbf{x}^{(k-1)})$, k= 1,..., $K$, $\mathbf{x}^{(0)} = \mathbf{x}$, the input point, and BC is defined at $\mathbf{x}^{(K)}$. Then the interpolation process can unwind the projections through back substitution (1170) by defining a series of output vectors:

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1,...,1.$$

where $\mathbf{y}^{(K)} = BC(\mathbf{x}^{(K)})$, and the process finally obtains the answer, $Interp(\mathbf{x}) = \mathbf{y}^{(0)}$.

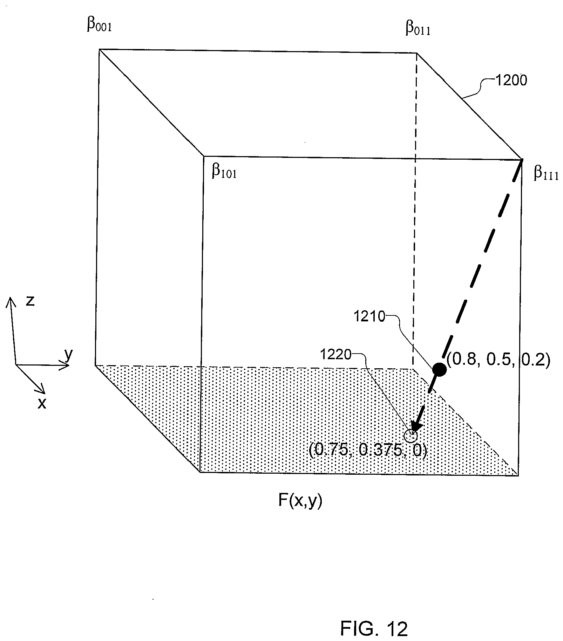

FIG. 12 illustrates an example interpolation in accordance with an exemplary embodiment of the present invention. In the example, $n = 3$, $m = 1$, and there are the following BC's on the unit hypercube 1200:

(a) 4 discrete BC's on vertices

$(0, 0, 1)$: $\beta_{001}$
$(0, 1, 1)$: $\beta_{011}$
$(1, 0, 1)$: $\beta_{101}$
$(1, 1, 1)$: $\beta_{111}$

(b) a continuous BC on the facet $x_3 = 0$: $F(x_1, x_2)$

For the input value $\mathbf{x} = (0.8, 0.5, 0.2)$ 1210, the enclosing simplex is associated with the permutation <1,2,3>. The 1st projection, 1220, is:

$$\mathbf{p}_1 = (1,1,1), \mathbf{x}^{(1)} = \mathbf{p}_1 + (\mathbf{x} - \mathbf{p}_1)/(1 - 0.2) = (0.75, 0.375, 0)$$

The first projection is on the facet $x_3 = 0$, so the interpolation process can stop. Backward substitution then gives $\mathbf{y}^{(0)} = 0.2\beta_{111} + 0.8F(0.75, 0.375)$ which is the answer.

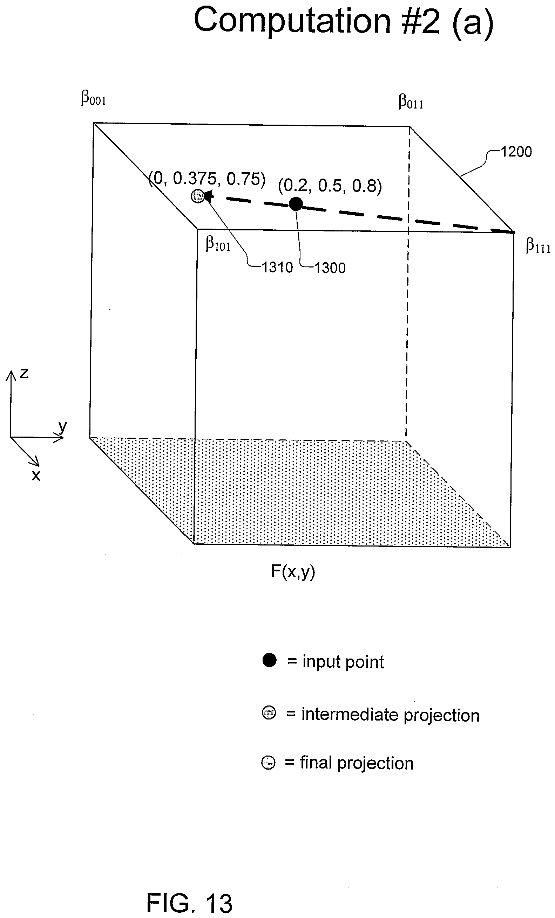

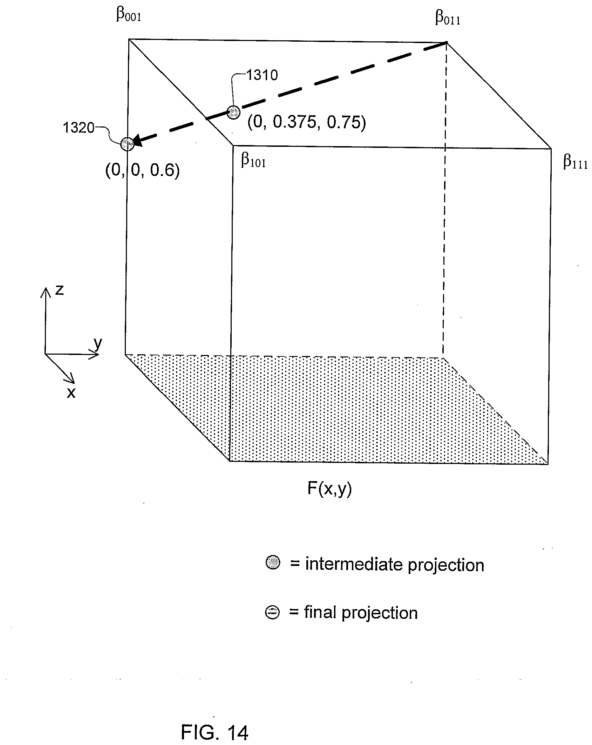

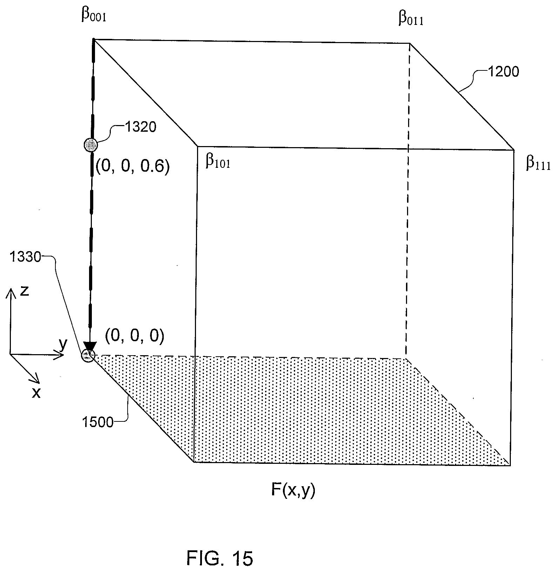

FIG. 13 to FIG. 15 illustrate an example interpolation in accordance with an exemplary embodiment of the present invention. In this example, the hypercube 1200 is the same as the previous sample, but the input point is x =(0.2, 0.5, 0.8) 1300. The enclosing simplex associated with the permutation is <3,2,1>.

The 1st projection 1310 is: $\mathbf{p}_1 = (1,1,1)$, $\mathbf{x}^{(1)} = \mathbf{p}_1 + (\mathbf{x} - \mathbf{p}_1)/(1-0.2) = (0,0.375,0.75)$

The 2nd projection 1320 is:$\mathbf{p}_2 = (0,1,1)$,$\mathbf{x}^{(2)} = \mathbf{p}_2 + (\mathbf{x}^{(1)} - \mathbf{p}_2)/(1 - 0.375) = (0,0,0.6)$
The 3rd projection 1330 is :$\mathbf{p}_3 (0,0,1)$,$\mathbf{x}^{(3)} = \mathbf{p}^3 + (\mathbf{x}^{(2)} - \mathbf{p}_3)/(1 - 0.6) = (0,0,0)$ which is on the facet $x_3 = 0$ 700.

Backward substitution then gives:

$$\mathbf{y}^{(1)} = 0.375\beta_{011} + 0.625\mathbf{y}^{(2)} = 0.375\beta_{011} + 0.375\beta_{001} + 0.25F(0,0)$$

which is the final answer. Note that this is identical to tetrahedral interpolation on the 4 points (1,1,1), (0,1,1), (0,0,1) and (0,0,0), confirming that the interpolation process is indeed a generalization of the tetrahedral interpolation process.

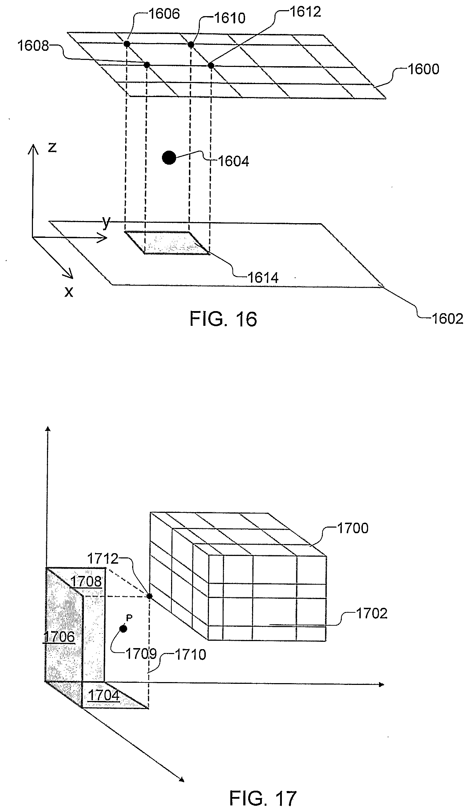

FIG. 16 illustrates an example of how an interpolation process in accordance with an exemplary embodiment of the present invention manages interpolation between two hyperplanes, 1600 and 1602, having incompatible grids. In the example a cell enclosing a given point 1604 is shown in the figure. The "top" vertices of the cell, 1606, 1608, 1610 and 1612, come directly from the grid in the top plane. The vertices in the "bottom" facet 1614 are not compatible with the grid in the bottom plane, so the interpolation process just treats the whole facet as having a BC with values obtained by interpolation on the grid in the bottom plane. It is then clear that this setup satisfies assumptions (a), (b) and (c) from above, and the interpolation process can be successfully performed.

It is also clear that the interpolation process has reduced the dimension of the interpolation problem by 1 because the result is a linear combination of values at the vertices in the upper grid, and an interpolated value in the lower plane, which has dimension one less. If a similar sandwiching plane configuration exists inside the lower plane, the interpolation process can in turn apply the procedure in the lower plane, further reducing the dimension by one. This procedure can continue until the interpolation process reaches dimension 0. This cascade of projections and interpolations can be called "Sequential Tetrahedral Interpolation."

FIG. 17 is an illustration of an interpolation process for an input value that falls in a "gap" in accordance with an exemplary embodiment of the present invention. In this example, a grid is imposed on a hypercube 1700 sitting strictly inside the positive quadrant. The hypercube itself has a grid 1702 on it, and each coordinate hyperplane, 1704, 1706 and 1708, may have grids that are not necessarily compatible with the grid on the hypercube or with each other. The "gap" between the hypercube and the coordinate planes has a cross-section that is "L-shaped" and is not amenable to standard techniques such as SLI. However, with the interpolation process described herein, cells enclosing an input value 1709 are introduced that easily cover this gap, such as cell 1710. The grids on the coordinate planes support interpolation that provides the necessary BC's for all the lower bottom facets of the cell, while the BC at the one remaining vertex 1712 is provided by the lower corner of the hypercube.

In actual application, the "unit hypercube" that is the basic setting of the interpolation process described herein is extracted from larger lattices, and the values at the vertices may require expensive calculation. On the other hand, it is also clear that tetrahedral interpolation requires only the values at the vertices of the simplex, which is a subset of all the vertices of the unit hypercube. It is therefore more efficient, even imperative in some situations, to implement what can be called "*deferred evaluation*". In detail, in a software implementation of the interpolation process, it is typical to have a subroutine that takes the unit hypercube and values at its vertices as input. By deferred evaluation, one can instead of passing the values at the vertices, simply pass the necessary information to evaluate the values of the vertices, without actually carrying out the evaluation. Inside the subroutine, actual evaluation of these values will be carried out only for those vertices that belong to the enclosing simplex, after the enclosing simplex is determined.

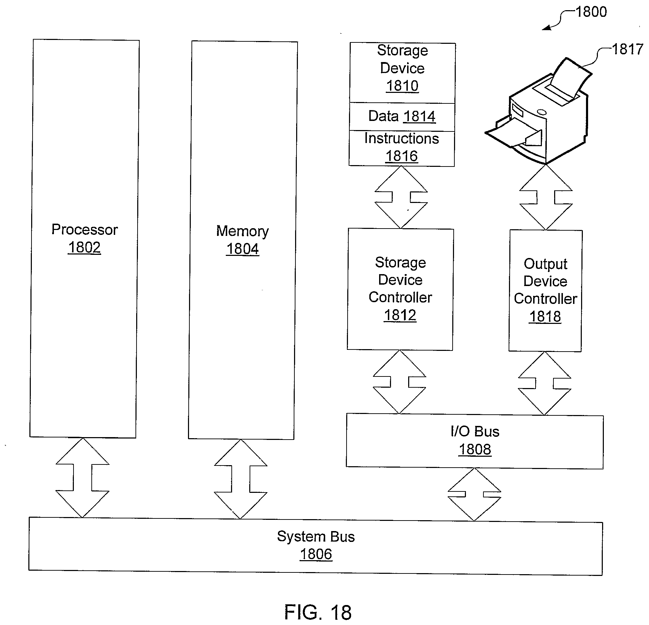

FIG. 18 is a block diagram of a data processing system, such as a color device, that may be used to host an interpolation process as described above in accordance with an exemplary embodiment of the present invention. The data processing system 1800 includes a processor 1802 coupled to a memory 1804 via system bus 1806. The processor is also coupled to external Input/Output (I/O) devices via the system bus and an I/O bus 1808. A storage device 1810 having computer system readable media is coupled to the processor via a storage device controller 1812 and the I/O bus and the system bus. The storage device is used by the processor to store and read data 1814 and program instructions 1816 used to implement the interpolation process described above. The processor may be further coupled to an output device, such as a color output device 1817, via an output device controller 1818 coupled to the I/O bus.

In operation, the processor loads the program instructions from the storage device into the memory. The processor executes the loaded program instructions to receive an input color value in a first color space. The processor then executes the program instructions to generate an output color value in a second color space as described above.

The present invention has been described above with respect to particular illustrative embodiments. It is understood that the present invention is not limited to the above-described embodiments and that various changes and modifications may be made by those skilled in the relevant art without departing from the scope of the invention.

**Claims**

1. A method of determining an interpolated output value for a second color space based on an input value x = ($x_1$, ..., $x_n$) in a first color space of n dimensions, comprising:

   generating a unit hypercube in the first color space enclosing the input value;
   imposing a respective discrete boundary condition at least on each of the vertices of the unit hypercube;
   determining (1110) a simplex which is enclosed by the unit hypercube and which encloses the input value, wherein a vertex $\mathbf{v}_n$ of the respective simplex is one of the vertices of the hypercube;
   performing (1120) iteratively, starting from the input value $\mathbf{x}^{(0)} = \mathbf{x}$ as a point to be projected, a barycentric projection $\mathbf{x}^{(k)} = \text{Bproj}_k(\mathbf{x}^{(k-1)})$ to obtain a respective intermediate point $\mathbf{x}^{(k)}$ for k=1, ..., K as a new point to be projected, wherein the barycentric projection is from a respective vertex of the simplex through the respective point to be projected onto a boundary of the unit hypercube, until, in a $K^{th}$ iteration, a respective intermediate point is on one of the boundaries on which a boundary condition BC of the boundary conditions is imposed, wherein the respective vertex is different for each of the iterations; and then
   performing (1170) K iterations of a back substitution in order to determine the interpolated output value as $\mathbf{y}^{(0)}$, wherein
   the $k^{th}$ of the barycentric projections is defined by

$$\text{BProj}_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases}$$

   with $\mathbf{p}_k = \mathbf{v}_n - \sum\limits^{k-1} \mathbf{e}_{\sigma(n+1-i)}$ and k = 1,2, ..., n, and $e_1$, $e_2$, ..., $e_n$ are standard basis vectors, and
   the $k^{th}$ of the K back substitutions is defined by

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1, ..., 1$$

   where

$$\mathbf{y}^{(K)} = BC(\mathbf{x}^{(K)})$$

2. The method of claim 1, wherein the boundary conditions include a discrete boundary condition.

3. The method of claim 2, wherein the discrete boundary condition is associated with a vertex of the unit hypercube.

4. The method of claim 1, wherein the boundary conditions include a continuous boundary condition.

5. The method of claim 4, wherein the continuous boundary condition is associated with a facet of the hypercube.

6. The method of claim 1, wherein:

   the boundary conditions include a first continuous boundary condition associated with a first facet of the unit hypercube and a second continuous boundary condition associated with a second facet of the unit hypercube; and
   the continuous boundary conditions agree at an intersection of the first facet and the second facet.

7. Computer-executable instructions stored on a computer-readable medium, the computer-executable instructions being executable to perform the method according to any of claims 1 to 6.

8. An apparatus for determining an interpolated output value for a color space based on an input value $\mathbf{x}$ = ($x_1$, ..., $x_n$) in a first color space of n dimensions, the apparatus comprising:

a generating unit adapted to generate a unit hypercube in the first color space enclosing the input value;
an imposing unit adapted to impose a respective discrete boundary condition at least on each of the vertices of the unit hypercube;
a determining unit adapted to determine a simplex which is enclosed by the unit hypercube and which encloses the input value, wherein a vertex $\mathbf{v}_n$ of the respective simplex is one of the vertices of the hypercube;
a performing unit adapted to perform iteratively, starting from the input value $\mathbf{x}^{(0)} = \mathbf{x}$ as a point to be projected, a barycentric projection $\mathbf{x}^{(k)} = \text{Bproj}_k(\mathbf{x}^{(k-1)})$ to obtain a respective intermediate point $\mathbf{x}^{(k)}$ for k=1, ..., K as a new point to be projected, wherein the barycentric projection is from a respective vertex of the simplex through the respective point to be projected onto a boundary of the unit hypercube until, in a $K^{th}$ iteration of the steps, a respective intermediate point is on one of the boundaries on which a boundary condition BC of the boundary conditions is imposed, wherein the respective vertex is different for each of the iterations; and
a determining unit adapted to determine the interpolated output value as $\mathbf{y}^{(0)}$ by performing K iterations of a back substitution, wherein
the $k^{th}$ of the barycentric projections is defined by

$$\text{BProj}_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases}$$

with $\mathbf{p}_k = \mathbf{v}_n - \sum_{i}^{k-1} \mathbf{e}_{\sigma(n+1-i)}$ and k = 1,2, ..., n, and $e_1$, $e_2$, ..., $e_n$ are standard basis vectors, and
the $k^{th}$ of the K back substitutions is defined by

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1, ..., 1$$

where

$$\mathbf{y}^{(K)} = BC(\mathbf{x}^{(K)})$$

.

**Patentansprüche**

1. Verfahren zum Bestimmen eines interpolierten Ausgabewerts für einen zweiten Farbraum basierend auf einem Eingabewert $\mathbf{x} = (x_1, ..., x_n)$ in einem ersten Farbraum mit n Dimensionen, das aufweist:

Erzeugen eines Einheitshyperkubus in dem ersten Farbraum, der den Eingabewert umschließt;
Auferlegen einer jeweiligen diskreten Randbedingung zumindest auf jeden der Eckpunkte des Einheitshyperkubus;
Bestimmen (1110) eines Simplex, das durch den Einheitshyperkubus umschlossen ist und das den Einheitswert umschließt, wobei ein Eckpunkt $\mathbf{v}_n$ des jeweiligen Simplex einer der Eckpunkte des Hyperkubus ist;
Iteratives Durchführen einer baryzentrischen Projektion $\mathbf{x}^{(k)} = \text{Bproj}_k(\mathbf{x}^{(k-1)})$, um einen jeweiligen Zwischenpunkt $\mathbf{x}^{(k)}$ für k = 1, ..., K als einen neuen zu projizierenden Punkt zu erhalten, wobei von dem Eingabewert $\mathbf{x}^{(0)} = \mathbf{x}$ als einem zu projizierenden Punkt gestartet wird, wobei die baryzentrische Projektion von einem jeweiligen Eckpunkt des Simplex durch den jeweiligen zu projizierenden Punkt auf einen Rand des Einheitshyperkubus ist, bis in einer K-ten Iteration ein jeweiliger Zwischenpunkt auf einem der Ränder ist, denen eine Randbedingung BC der Randbedingungen auferlegt ist, wobei der jeweilige Eckpunkt verschieden für jede der Iterationen ist; und dann
Durchführen (1170) von K Iterationen eines Rückwärtsersetzens, um den interpolierten Ausgabewert als $\mathbf{y}^{(0)}$ zu bestimmen, wobei
die k-te der baryzentrischen Projektionen definiert ist durch

$$BProj_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases}$$

mit $\mathbf{p}_k = \mathbf{v}_n - \sum_{i=1}^{k-1} \mathbf{e}_{\sigma(n+1-i)}$ und k=1,2, ..., n und $e_1$, $e_2$, ..., $e_n$ Standard-basisvektoren sind und die k-te der K Rückwärtsersetzungen definiert ist durch

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1,...,1$$

wobei

$$\mathbf{y}^{(K)} = BC(\mathbf{x}^{(K)}).$$

2. Verfahren nach Anspruch 1, wobei die Randbedingungen eine diskrete Randbedingung enthalten.

3. Verfahren nach Anspruch 2, wobei die diskrete Randbedingung mit einem Eckpunkt des Einheitshyperkubus verknüpft ist.

4. Verfahren nach Anspruch 1, wobei die Randbedingungen eine kontinuierliche Randbedingung enthalten.

5. Verfahren nach Anspruch 4, wobei die kontinuierliche Randbedingung mit einer Facette des Hyperkubus assoziiert ist.

6. Verfahren nach Anspruch 1, wobei:

   die Randbedingungen eine erste kontinuierliche Randbedingung, die mit einer ersten Facette des Einheitshyperkubus verknüpft ist, und eine zweite kontinuierliche Randbedingung, die mit einer zweiten Facette des Einheitshyperkubus verknüpft ist enthalten; und
   wobei die kontinuierlichen Randbedingungen an einem Schnittpunkt der ersten Facette und der zweiten Facette übereinstimmen.

7. Computerausführbare Instruktionen, die auf einem computerlesbaren Medium gespeichert sind, wobei die computerausführbaren Instruktionen ausführbar sind, um das Verfahren nach einem der Ansprüche 1 bis 6 durchzuführen.

8. Vorrichtung zum Bestimmen eines interpolierten Ausgabewerts für einen Farbraum basierend auf einem Eingabewert $\mathbf{x} = (x_1, ..., x_n)$ in einem ersten Farbraum mit n Dimensionen, wobei die Vorrichtung aufweist:

   eine Erzeugungseinheit, die angepasst ist, einen Einheitshyperkubus in dem ersten Farbraum zu erzeugen, der den Eingabewert umschließt;
   eine Auferlegungseinheit, die angepasst ist, eine jeweilige diskrete Randbedingung zumindest jedem der Eckpunkte des Einheitshyperkubus aufzuerlegen;
   eine Bestimmungseinheit, die angepasst ist, ein Simplex zu bestimmten, das durch den Einheitshyperkubus umschlossen ist und das den Eingabewert umschließt, wobei ein Eckpunkt $\mathbf{v}_n$ des jeweiligen Simplex einer der Eckpunkte des Hyperkubus ist;
   eine Durchführeinheit, die angepasst ist, iterativ eine baryzentrische Projektion $\mathbf{x}^{(k)} = Bproj_k(x^{(k-1)})$ durchzuführen, um einen jeweiligen Zwischenpunkt $\mathbf{x}^{(k)}$ für k = 1, ..., K als einen neuen zu projizierenden Punkt durchzuführen, wobei von dem Eingabewert $\mathbf{x}^{(0)} = \mathbf{x}$ als einen zu projizierenden Punkt gestartet wird, wobei die baryzentrische Projektion von einem jeweiligen Eckpunkt des Simplex durch den jeweiligen zu projizierenden Punkt auf einen Rand des Einheitshyperkubus ist, bis in einer K-ten Iteration der Schritte ein jeweiliger Zwischenpunkt auf einem der Ränder, denen eine Randbedingung BC der Randbedingungen auferlegt ist, ist, wobei der jeweilige Eckpunkt verschieden für jede der Iterationen ist; und
   eine Bestimmungseinheit, die angepasst ist, den interpolierten Ausgabewert als $\mathbf{y}^{(0)}$ durch durchführen von K Iterationen eines Rückwärtsersetzens durchzuführen, wobei
   die k-te der baryzentrischen Projektionen definiert ist durch

$$\text{BProj}_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases},$$

mit $\mathbf{p}_k = \mathbf{v}_n - \sum\limits_{i=1}^{k-1} \mathbf{e}_{\sigma(n+1-i)}$ und k = 1, 2, ..., n, und $e_1$, $e_2$, ..., $e_n$ Standardbasisvektoren sind, und die k-te der K Rückwärtsersetzungen definiert ist durch

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1,...,1$$

wobei

$$\mathbf{y}^{(K)} = BC\,(\mathbf{x}^{(K)}).$$

## Revendications

1. Procédé de détermination d'une valeur de sortie interpolée pour un deuxième espace colorimétrique sur la base d'une valeur d'entrée x = ($x_1$, ..., $x_n$) dans un premier espace colorimétrique de n dimensions, comprenant le fait :

   de générer un hypercube unitaire dans le premier espace colorimétrique renfermant la valeur d'entrée ;
   d'imposer une condition limite discrète respective au moins sur chacun des sommets de l'hypercube unitaire ;
   de déterminer (1110) un simplexe qui est enfermé par l'hypercube unitaire et qui renferme la valeur d'entrée, où un sommet $v_n$ du simplex respectif est l'un des sommets de l'hypercube ;
   de réaliser (1120) de manière itérative, à partir de la valeur d'entrée $x^{(0)} = x$ en tant que point à projeter, une projection barycentrique $X^{(k)} = Bproj_k(X^{(k-1)})$ pour obtenir un point intermédiaire respectif $x^{(k)}$ pour k = 1, ..., K en tant que nouveau point à projeter, où la projection barycentrique provient d'un sommet respectif du simplex à travers le point respectif à projeter sur une limite de l'hypercube unitaire, jusqu'à ce que, dans une $k^{\text{ième}}$ itération, un point intermédiaire respectif soit sur l'une des limites sur laquelle une condition limite BC des conditions limites étant imposée, où le sommet respectif est différent pour chacune des itérations ; et ensuite de réaliser (1170) K itérations d'une substitution arrière afin de déterminer la valeur de sortie interpolée en tant que $y^{(0)}$, où
   la $k^{\text{ième}}$ projection des projections barycentriques est définie par

$$\text{BProj}_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases}$$

   avec $\mathbf{p}_k = \mathbf{v}_n - \sum\limits_{i=1}^{k-1} \mathbf{e}_{\sigma(n+1-i)}$ et k = 1, 2, ..., n, et $e_1$, $e_2$, ..., en sont des vecteurs de base standard, et
   la $k^{\text{ième}}$ substitution des K substitutions arrières est définie par

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1,...,1$$

   où

$$\mathbf{y}^{(K)} = BC(\mathbf{x}^{(K)})\,.$$

2. Procédé de la revendication 1, dans lequel les conditions limites comportent une condition limite discrète.

3. Procédé de la revendication 2, dans lequel la condition limite discrète est associée à un sommet de l'hypercube unitaire.

4. Procédé de la revendication 1, dans lequel les conditions limites comportent une condition limite continue.

5. Procédé de la revendication 4, dans lequel la condition limite continue est associée à une facette de l'hypercube.

6. Procédé de la revendication 1, dans lequel :

   les conditions limites comportent une première condition limite continue associée à une première facette de l'hypercube unitaire et une deuxième condition limite continue associée à une deuxième facette de l'hypercube unitaire ; et
   les conditions limites continues s'accordent au niveau d'une intersection de la première facette et de la deuxième facette.

7. Instructions exécutables par ordinateur stockées sur un support lisible par ordinateur, les instructions exécutables par ordinateur étant exécutables pour mettre en oeuvre le procédé selon l'une des revendications 1 à 6.

8. Appareil pour déterminer une valeur de sortie interpolée pour un espace colorimétrique sur la base d'une valeur d'entrée $x = (x_1, ..., x_n)$ dans un premier espace colorimétrique de n dimensions, l'appareil comprenant :

   une unité de génération adaptée pour générer un hypercube unitaire dans le premier espace colorimétrique renfermant la valeur d'entrée ;
   une unité d'imposition adaptée pour imposer une condition limite discrète respective au moins sur chacun des sommets de l'hypercube unitaire ;
   une unité de détermination adaptée pour déterminer un simplex qui est enfermé par l'hypercube unitaire et qui renferme la valeur d'entrée, où un sommet $v_n$ du simplex respectif est l'un des sommets de l'hypercube ;
   une unité de réalisation adaptée pour réaliser de manière itérative, à partir de la valeur d'entrée $x^{(0)} = x$ en tant que point à projeter, une projection barycentrique $X^{(k)} = Bproj_k(X^{(k-1)})$ pour obtenir un point intermédiaire respectif $x^{(k)}$ pour $k = 1, ..., K$ en tant que nouveau point à projeter, où la projection barycentrique provient d'un sommet respectif du simplex à travers le point respectif à projeter sur une limite de l'hypercube unitaire jusqu'à ce que, dans une $k^{ième}$ itération des étapes, un point intermédiaire respectif soit sur l'une des limites sur laquelle une condition limite BC des conditions limites est imposée, où le sommet respectif est différent pour chacune des itérations ; et
   une unité de détermination adaptée pour déterminer la valeur de sortie interpolée en tant que $y^{(0)}$ en réalisant K itérations d'une substitution arrière, où
   la $k^{ième}$ projection des projections barycentriques est définie par

$$BProj_k(\mathbf{x}) = \begin{cases} \mathbf{p}_k + (\mathbf{x} - \mathbf{p}_k)/(1 - x_{\sigma(k)}) & \text{if } \mathbf{x} \neq \mathbf{p}_k \\ \mathbf{x} & \text{if } \mathbf{x} = \mathbf{p}_k \end{cases}$$

avec $\mathbf{p}_k = \mathbf{v}_n - \sum_{i=1}^{k-1} \mathbf{e}_{\sigma(n+1-i)}$ et $k = 1, 2, ..., n$, et $e_1, e_2, ...,$ en sont des vecteurs de base standard, et
la $k^{ième}$ substitution des K substitutions arrières est définie par

$$\mathbf{y}^{(k-1)} = x_{\sigma(k)}^{(k-1)} BC(\mathbf{p}_k) + (1 - x_{\sigma(k)}^{(k-1)})\mathbf{y}^{(k)}, k = K, K-1, ..., 1$$

où

$$\mathbf{y}^{(K)} = BC(\mathbf{x}^{(K)})$$

.

FIG. 1
PRIOR ART

FIG. 2

Input Color
Value in High
Fidelity Color
Space

300

Interpolation
Process

304

306

Strata
Collections

312

Output Color
Value in
Second High
Fidelity Color
Space

302

Output Color
Value in Lower
Dimensional
Color Space

310

FIG. 3

FIG. 4

FIG. 5

FIG. 6

FIG. 7

FIG. 8

FIG. 9

FIG. 10

EP 1 846 914 B1

Start

1100

Determine
Which Simplex
Encloses the
Input Value — 1110

Perform
Barycentric
Projection of
Input Value to
Hyperplane — 1120

1160

1150

No

Projected Point on Facet
Having Boundary
Condition?

Yes

Find
Interpolated
Value by Back
Substitution of
Projections — 1170

FIG. 11

End — 1140

F(x,y)

FIG. 12

# Computation #2 (a)

F(x,y)

● = input point

◉ = intermediate projection

☺ = final projection

FIG. 13

F(x,y)

⊙ = intermediate projection

⊖ = final projection

FIG. 14

FIG. 15

FIG. 16

FIG. 17

EP 1 846 914 B1

Processor
1802

Memory
1804

Storage
Device
1810

Data 1814

Instructions
1816

1817

1800

Storage
Device
Controller
1812

Output
Device
Controller
1818

I/O Bus
1808

System Bus
1806

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020113982 A1

- US 20030095638 A1

**Non-patent literature cited in the description**

- **J. Z. CHANG.** Recent Results in Color Calibration Using Sequential Linear Interpolation. *IS&T's, 47th Annual Conference/IPCS,* 01 January 1994, 500-505

- **C. A. HALL.** Transfinite Interpolation of Steam Tables. *Journal of Computational Physics,* 01 May 1975, vol. 18 (1), 79-91